(19) Europäisches Patentamt
European Patent Office
Office européen des brevets

(11) EP 0 738 750 B1

(12) EUROPÄISCHE PATENTSCHRIFT

(45) Veröffentlichungstag und Bekanntmachung des Hinweises auf die Patenterteilung:
**06.09.2000 Patentblatt 2000/36**

(51) Int Cl.⁷: **C08J 7/04**, C09J 7/02

(21) Anmeldenummer: **96105705.6**

(22) Anmeldetag: **11.04.1996**

# (54) Mit Polyurethan beschichtete Verpackungsfolien

Polyurethane-coated packing films

Pellicules pour emballage revêtues de polyuréthane

(84) Benannte Vertragsstaaten:
**BE CH DE ES FR GB IT LI LU NL**

(30) Priorität: **20.04.1995 DE 19514583**

(43) Veröffentlichungstag der Anmeldung:
**23.10.1996 Patentblatt 1996/43**

(73) Patentinhaber: **BASF AKTIENGESELLSCHAFT**
**67056 Ludwigshafen (DE)**

(72) Erfinder:
- **Licht, Ulrike, Dr.**
  **68163 Mannheim (DE)**
- **Seyffer, Hermann, Dr.**
  **69123 Heidelberg (DE)**
- **Rieger, Jens, Dr.**
  **67069 Ludwigshafen (DE)**
- **Kaehs, Helmut**
  **67150 Niederkirchen (DE)**
- **Hummerich, Rainer, Dr.**
  **67551 Worms (DE)**

(56) Entgegenhaltungen:
**EP-A- 0 155 595**
**EP-A- 0 240 886**
**EP-A- 0 382 052**
**WO-A-90/06330**
**WO-A-94/25270**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 0 738 750 B1

## Beschreibung

Die vorliegende Erfindung betrifft Verpackungsfolien, die mit einem Polyurethan beschichtet sind, welches hydrophile Gruppen trägt, die die Wasserdispergierbarkeit des Polyurethans ermöglichen und welches einen Schmelzpunkt von 20 bis 70°C aufweist, wobei seine Schmelzenthalpie in diesem Temperaturintervall mindestens 20 J/g beträgt. Weiterhin betrifft die Erfindung Verpakkungsverfahren sowie Gegenstände, die mit den Verpackungsfolien verpackt sind.

Nahrungs- und Arzneimittel, Kosmetika und andere empfindliche, verderbliche oder kostbare Güter werden häufig in Verpackungsfolien wie Papier-, Metall- oder Kunststoffolien eingepackt. Zweckmäßigerweise werden diese Artikel darin eingesiegelt, so daß sie von der Verpackungsfolie dicht umschlossen sind. Hierdurch werden die Artikel vor Schäden, die durch mechanische Beanspruchung, (z.B. Verkratzen), Luft- und Feuchtigkeitseinwirkung, Austrocknung sowie Verstauben entstehen, bewahrt. Zudem bietet eine intakte Verpackung dem Verbraucher die Gewähr, daß sich der Artikel noch in hygienisch einwandfreien Zustand befindet.

Bei der Versiegelung wird ein Verbund zwischen der Innenseite, d.h. der dem Füllgut zugewandten Seite der Verpackungsfolie mit einem anderen Teil der Verpackungsfolie hergestellt, und zwar mit der Innenseite dieses anderen Folienteils, wenn die Verpackungsfolie um den Artikel gefaltet ist, oder mit der Außenseite der Verpackungsfolie, wenn sie um den Artikel gerollt ist.

Es ist allgemein bekannt (vgl. EP-A-0574803), daß sich die Verpackungsfolien einfacher versiegeln lassen, wenn sie flächig mit einem Siegellack beschichtet sind. Um die Verpackungsfolien zu versiegeln, werden sie beim sog. Heißsiegelverfahren mit beheizten Siegelbacken für wenige Sekunden oder Bruchteilen von Sekunden die Temperaturen von ca. 100°C zusammengepreßt. Dabei wird die Beschichtung aufgeschmolzen und mit dem zu verklebenden Folienteil in Kontakt gebracht, so daß nach dem Abkühlen und Erstarren der Beschichtung ein fester Verbund entsteht.

Beim Heißsiegelverfahren besteht allerdings das Problem, daß beim Verpacken von temperaturempfindlichen Artikeln, z.B. Speiseeis, Schokoladenriegeln oder Pralinen, die Versiegelung in einem bestimmten Abstand vom Artikel erfolgen muß, damit er durch die von den Siegelbacken abgegebenen Wärme nicht geschädigt wird. Dies bedingt einen erhöhten Verbrauch an Verpackungsmaterial. Aus diesem Grund werden Siegellacke gewünscht, die sich bei einer erheblich tieferen Temperatur gut versiegeln lassen.

Neben der tiefen Siegeltemperatur werden allerdings noch andere Anforderungen an die Gebrauchseigenschaften eines Siegellacks gestellt. Üblicherweise erfolgt die Herstellung der beschichteten Verpackungsfolie und der Verpackungsprozeß selbst nicht an einem Ort in zwei unmittelbar aufeinander folgenden Arbeitsschritten. Nach dem Beschichten der Folien müßten sie deshalb im allgemeinen aufgewickelt und transportiert werden. Dabei dürfen die Folien nicht fest aneinander haften, d.h. sie sollen eine gute Blockfestigkeit aufweisen.

Die in der EP-A-0 574 803 beschriebenen Mischungen von Copolymerisaten mit verschiedener Glasübergangstemperatur, stellen bereits einen Kompromiß im Hinblick auf diese beiden divergierenden Gebrauchseigenschaften dar, da die mit ihnen beschichtete Folien bei 40°C noch nicht blocken, und bei 80°C noch gut siegelbar sind.

Weiterhin ist aus Verpackungs-Rundschau, Heft 6 aus 1989, S. 649 bis 654 bekannt, für diesen Anwendungszweck wässerige Polyvinylidenchlorid (PVDC) Dispersionen einzusetzen. Diese weisen ein gutes Blockverhalten auf, jedoch sind hohe Siegeltemperaturen erforderlich. Seitens der Verpackungsindustrie besteht daher noch ein Bedürfnis nach Siegellacken, bei denen das Temperaturintervall zwischen Block- und Siegeltemperatur noch geringer ist.

Aus der EP-A-0 155 595 sind druckbare Folien mit metallischem Glanz bekannt. Diese Folien weisen eine Trägerschicht aus Polypropylen auf, die feste Pigmentteilchen enthalten, sowie eine siegelfähige äußere Oberflächenschicht aus einem Homo- oder Copolymer von Propylen, Ethylen oder Butylen. Diese Folien werden für die Verpackung von Lebensmitteln empfohlen.

Aus der WO 94/25270 sind Folien bekannt, die mit einem Copolymer aus 65 bis 95 Gew.-% Ethylen und 5 bis 35 Gew.-% Acryl- oder Methacrylsäure, wobei die Carboxylatgruppen mit Metallionen neutralisiert sind, beschichtet sind. Mit diesen Folien lassen sich durch Heißsiegeln wasserfeste Verpackungen herstellen.

Aus der EP-A-240 886 sind siegelbare gereckte Verbundfolien bekannt, die aus einer Basisschicht aus einem Propylenpolymeren, einer Haftvermittlerschicht und einer heißsiegelbaren Schicht aus einem thermoplastischen Polyurethanisomeren aufgebaut sind sowie deren Verwendung als Verpackungsmaterial durch Heißsiegelung der Folien.

Aus der EP-A-0 382 052 sind wässerige Dispersionen bekannt, die man durch Dispergierung einer Lösung, bestehend aus einem Polyurethan mit hydrophilen Gruppen, einem Kondensationsharz sowie Aceton, in Wasser erhält. Die Nacharbeitung vom Beispiel 1 zeigte, daß getrocknete Filme aus Polyurethandispersionen einen Schmelzpunkt bei 50°C aufweisen, wobei die Schmelzenthalpie 30 J/g beträgt. Es wird empfohlen, diese Dispersionen zur Verklebung von Substanzen wie Holz, Metall und Kunststoffen einzusetzen. Es findet sich keinerlei Hinweis auf die Verwendung der Dispersionen zum Verschweißen von Folien und die damit-verbundenen Probleme.

Die Aufgabe der vorliegenden Erfindung bestand daher darin, beschichtete Verpackungsfolien bereitzustellen, mit denen sich auf wirtschaftliche Weise temperaturempfindliche Artikel einsiegeln lassen. Insbesondere soll die Temperatur, bei der sich die Verpackungsfolien siegeln lassen, nur geringfügig oberhalb Raumtemperatur oder bei

Raumtemperatur liegen. Weiterhin sollen sich die Verpackungsfolien in Form von Rollen auf üblicher Weise verarbeiten und transportieren lassen, ohne daß sie dabei verblocken.

Demgemäß wurden die eingangs definierten beschichteten Verpackungsfolien gefunden.

Für Herstellung der erfindungsgemäßen beschichteten Verpackungsfolien eignen sich die üblicherweise in der Verpackungsindustrie eingesetzten Trägerfolien, also Trägerfolien aus Materialien wie Kunststoff, z.B. Polyolefin, insbesondere Polyethylen und Polypropylen, Polyester, Polyamid, Zellglas, Polyacrylnitril, Polyvinylchlorid, Aluminium sowie Papier und Pappe. Auch Trägerfolien, die aus mehreren Schichten aufgebaut sind, die aus den verschiedenen genannten Materialien bestehen, sind geeignet. Besonders bevorzugt sind Folien aus orientierten Polypropylen.

Trägerfolien, die als Verpackungsmittel eingesetzt werden, haben üblicherweise eine Dicke von 10 bis 500 µm. Zur Verbesserung der Haftung des Polyurethans auf der Trägerfolie werden sie zweckmäßigerweise mit einem Primer beschichtet. Geeignete Primer sind handelsübliche 2-komponentige Polyurethanprimer.

Die Verpackungsfolien sind bevorzugt auf einer Seite vollflächig mit einem Polyurethan beschichtet, welches hydrophile Gruppen trägt, die die Wasserdispergierbarkeit des Polyurethans ermöglichen, und welches einen Schmelzpunkt von 20 bis 70°C, bevorzugt von 25 bis 60°C aufweist, wobei die Schmelzenthalpie in diesem Temperaturintervall mindestens 20 J/g beträgt. Prinzipiell soll die Schmelzenthalpie oberhalb von 20 J/g so groß wie irgend möglich sein, wobei es bekannt ist, daß die Werte dieser Stoffeigenschaft bei Polyurethan natürlich nicht beliebig groß werden können. Besonders gute Ergebnisse werden mit Polyurethanen mit einer Schmelzenthalpie von 40 bis 70 J/g in dem definierten Temperaturintervall erzielt.

Die Schichtdicke des Polyurethanfilms, mit der die Verpackungsfolien beschichtet sind, beträgt günstigerweise 0,5 bis 10, bevorzugt 1 bis 5 µm.

Die Beschichtung der Verpackungsfolien nimmt man im allgemeinen so vor, daß man das Polyurethan in Form einer Lösung oder einer wässerigen Dispersion, bevorzugt als lösungsmittelfreie wässerige Dispersion auf die Verpackungsfolie aufträgt. Das Auftragen kann nach den allgemein üblichen Auftragsverfahren erfolgen (vgl. "Veredeln von Kunststoff-Oberflächen", Hrsg.: Klaus Stoeckhert, Autor: E. Lendle, Carl Hanser Verlag München, Berlin, S. 156 und "Handbuch der Papier- und Pappenfabrikation", Dr. Martin Sändig OHG, Wiesbaden 1971, S. 1027 und 1826 bis 1830, also beispielsweise durch Streichen, Rakeln oder Sprühen).

Sofern bahnförmige Trägerfolien verwendet werden, wird die Polymerdispersion üblicherweise aus einer Wanne über eine Auftragswalze aufgetragen und mit Hilfe einer Luftbürste egalisiert. Weiterhin ist das Reverse Gravure-Verfahren zum Aufbringen der Beschichtung auf die Trägerfolie geeignet. Zur Verbesserung der Haftung der Beschichtung auf der Trägerfolie, wird die Trägerfolie vor dem Beschichten mit Vorteil einer Corona Behandlung unterworfen. Die Polyurethan-Lösung, bzw. Dispersion, wird vorzugsweise in Mengen von 1 bis 30 g/m$^2$ (im allgemeinen 2 bis 7 g/m$^2$ bei Kunststoffolien und 10 bis 30 g/m$^2$ bei Papier) aufgetragen.

Zweckmäßigerweise wird die beschichtete Verpackungsfolie nach dem Trocknen des Lösungsmittels bzw. wasserhaltigen Polyurethanfilms zu Rollen aufgewickelt. Falls die Trocknung bei Temperaturen oberhalb des Schmelzpunktes des Polyurethans vorgenommen wird, wobei man die beschichtete Trägerfolie beispielsweise durch einen Trockenkanal führt, der mit Infrarot-Struktur ausgestattet sein kann, so ist es erforderlich, die beschichtete Verpackungsfolie vor dem Wickeln auf Temperaturen unterhalb des Schmelzpunktes des Polyurethans abzukühlen, oder ein Trennpapier mit aufzuwickeln, da ansonsten die Gefahr eines Verblockens der Verpackungsfolie besteht.

Für die Herstellung der Verpackungsfolien eignen sich insbesondere wässerige Dispersionen, die ein Polyurethan enthalten, welches aufgebraucht ist aus

a) mehrwertigen Isocyanaten mit 4 bis 30 C-Atomen,

b) Diolen, von denen

b1) 10 bis 100 mol-%, bezogen auf die Gesamtmenge der Diole (b), ein Molekulargewicht von 500 bis 5000 g/mol aufweisen, wobei wenigstens 80 Gew.-% der Diole (b1) Diole (b1.1) sind, die einen Schmelzpunkt von 30 bis 100°C aufweisen und deren Schmelzenthalpie in diesem Temperaturintervall mindestens 50 J/g beträgt und

b2) 0 bis 90 mol-%, bezogen auf die Gesamtmenge der Diole (b), ein Molekulargewicht von 60 bis 500 g/mol aufweisen,

c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und

d) von den Monomeren (a), (b) und (c) verschiedene Monomere mit wenigstens einer Isocyanatgruppe oder wenigstens einer gegenüber Isocyanatgruppen reaktiven Gruppe, die darüberhinaus wenigstens eine (potentiell) hydrophile Gruppen tragen, wodurch die Wasserdispergierbarkeit der Polyurethane bewirkt wird.

Als Monomere (a) kommen die üblicherweise in der Polyurethanchemie eingesetzten Polyisocyanate in Betracht.

Insbesondere zu nennen sind Diisocyanate X(NCO)2, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4-Diisocyanato-diphenylmethan, p-Xylylendiisocyanat, die Isomeren des Bis-(4-isocyanatocyclohexyl)methan wie das trans/trans-, das cis/cis- und das cis/ trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 20 mol-% 2,4 Diisocyanatotoluol und 80 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (a) kann man auch Isocyanate einsetzen, die neben den freien Isocyanatgruppen weitere verkappte Isocyanat-gruppen, z.B. Uretdion- oder Urethangruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-$\alpha$,$\alpha$-dimethylbenzylisocyanat (TMI).

Um Polyurethane mit einem gewissen Verzweigungs- oder Vernetzungsgrad herzustellen, können z.B. dreiwertige und vierwertige Isocyante eingesetzt werden. Derartige Isocyanate werden z.B. erhalten, indem man zweiwertige Isocyanate miteinander umsetzt, indem man einen Teil ihrer Isocyanatgruppen zu Allophanat- oder Isocyanurat-Gruppen derivatisiert. Handelsübliche Verbindungen sind beispielsweise das Isocyanurat des Hexamethylendiisocyanats.

Im Hinblick auf gute Filmbildung und Elastizität kommen als Diole (b) vornehmlich höhermolekulare Diole (b1) in Betracht, die ein Molekulargewicht von etwa 500 bis 5000, vorzugsweise von etwa 100 bis 3000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)cyclohexane wie 1,4-Bis-(hydroxymethyl)cyclohexan, 2-Methylpropan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche der allgemeinen Formel $HO-(CH_2)_z-$

COOH, wobei z eine Zahl von 1 bis 20, bevorzugt eine ungerade Zahl von 3 bis 19, z.B. epsilon-Caprolacton, β-Propiolacton, gamma-Butyrolacton und/oder Methyl-epsilon-caprolacton sowie deren Gemische in Betracht. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran und einen Molekulargewicht von 2000 bis 5000 g/mol, und vor allem 3500 bis 4500 g/mol.

Die Polyesterdiole und Polyetherdiole können auch als Gemische im Verhältnis 0,1 : 1 bis 1 : 9 eingesetzt werden.

Beispielsweise erhält man Polyurethane mit dem definitionsgemäßen Schmelzpunkt und der definitionsgemäßen Schmelzenthalpie, wenn wenigstens 80, bevorzugt 90 Gew.-% der Diole (b1) solche Diole sind (Diole b1.1), die einen Schmelzpunkt von 20 bis 70, bevorzugt von 30 bis 100°C aufweisen und die Schmelzenthalpie in diesem Temperaturintervall mindestens 50, bevorzugt von 60 bis 100, besonders bevorzugt 80 bis 100 J/g beträgt. Ganz besonders bevorzugt beträgt der Anteil der Diole (b1.1) 100 Gew.-%.

Unter den bereits angeführten Diolen (b1) haben die folgenden Verbindungen den gewünschten Schmelzpunkt und Schmelzenthalpie: Polyesterdiole aus einem Alkohol $HO-(CH_2)_x-OH$, wobei x eine Zahl von 1 bis 20, bevorzugt eine gerade Zahl von 2 bis 20 ist und einer Dicarbonsäure $HOOC-(CH_2)_y-COOH$, wobei y eine Zahl von 1 bis 20, bevorzugt eine gerade Zahl von 2 bis 20 ist.

Weiterhin sind Polyesterdiole auf Basis von Lactonen der allgemeinen Formel $HO-(CH_2)_z-COOH$, wobei z eine Zahl von 1 bis 20, bevorzugt eine ungerade Zahl von 3 bis 19, z.B. epsilon-Caprolacton, β-Propiolacton und gamma-Butyrolacton geeignet.

Geeignet ist weiterhin Polytetrahydrofuran mit einem Molekulargewicht von 2000 bis 5000 und vor allem von 3500 bis 4500 g/mol. Welche weiteren Diole (b1) als Diole (b1.1) in Betracht kommen, kann durch einfache Vorversuche mit Hilfe der DSC-Methode (Differential Scanning Calorimetry) ermittelt werden.

Die Härte und der Elastizitätsmodul der Polyurethane läßt sich erhöhen, wenn als Diole (b) neben den Diolen (b1) noch niedermolekulare Diole (b2) mit einem Molekulargewicht von etwa 50 bis 500, vorzugsweise von 60 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen bevorzugt werden.

Bevorzugt beträgt der Anteil der Diole (b1), bezogen auf die Gesamtmenge der der Diolen (b) 10 bis 100 mol-% und der Anteil der Monomere (b2), bezogen auf die Gesamtmenge der der Diolen (b) 0 bis 90 mol-%. eingesetzt. Besonders bevorzugt beträgt das Verhältnis der Diole (b1) zu den Monomeren (b2) 0,2 : 1 bis 5 : 1, besonders bevorzugt 0,5 : 1 bis 2 : 1.

Die Monomere (c), die von den Diolen (b) verschieden sind, dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hyxdroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre

und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Die Polyurethane enthalten bevorzugt kein Polyamin oder 1 bis 10, besonders bevorzugt 4 bis 8 mol-%, bezogen auf die Gesamtmenge der Komponenten (b) und (c) eines Polyamins mit mindestens 2 gegenüber Isocyanaten reaktiven Aminogruppen als Monomere (c).

Ferner können zum Kettenabbruch in untergeordneten Mengen, d.h. bevorzugt in Mengen von weniger als 10 mol-%, bezogen auf die Komponenten (b) und (c), Monoalkohole eingesetzt werden. Ihre Funktion ist im allgemeinen ähnlich wie die der Monoisocyanate, d.h. sie dienen hauptsächlich zur Funktionalisierung des Polyurethans. Beispiele sind Ester von Acryl- oder Methacrylsäure wie Hydroxyethylacrylat oder Hydroxyethylmethacrylat.

Um die Wasserdispergierbarkeit der Polyurethane zu erreichen, sind die Polyurethane neben den Komponenten (a), (b) und (c) aus von den Komponenten (a), (b) und (c) verschiedenen Monomere (d), die wenigstens eine Isocyanatgruppe oder wenigstens eine gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen

Der Anteil der Komponenten mit (potentiell) hydrophilen Gruppen an der Gesamtmenge der Komponenten (a), (b), (c) und (d) wird im allgemeinen so bemessen, daß die Molmenge der (potentiell) hydrophilen Gruppen, bezogen auf die Gewichtsmenge aller Monomere (a) bis (b), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (d).

Bevorzugte Monomere mit nichtionischen hydrophilen Gruppen sind das Polyethylenglykol und Diisocyanate, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (d) sind z.B. in Ullmanns Encyklopädie der technischen Chemie, 4. Auflage, Band 19, S. 311-313 und beispielsweise in der DE-A 495 745 ausführlich beschrieben.

Als (potentiell) kationische Monomere (d) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren oder durch Umsetzung mit geeigneten Quaternisierungsmitteln wie $C_1$- bis $C_6$-Alkylhalogeniden, z.B. Bromiden oder Chloriden in die Ammoniumsalze überführt.

Als Monomere mit (potentiell) anionischen Gruppen werden üblicherweise aliphatische, cycloaliphatische, araliphatische oder aromatische Mono- und Dihydroxycarbonsäuren in Betracht, die mindestens eine alkoholische Hydroxylgruppe oder eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel

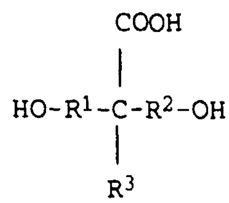

in welcher $R^1$ und $R^2$ für eine $C_1$- bis $C_4$-Alkandiyl-Einheit und $R^3$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphospsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (d) mit gegenüber Isocyanaten reaktiven Aminogruppen kommen Aminocarbonsäuren wie Lysin, β-Alanin, die in der DE-A 2034 479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkylaminoalkylcarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a), (b), (c) und (d) sowie ihre jeweiligen Molmengen so gewählt, daß das Verhältnis A : B mit

A) der Molmenge an Isocyanatgruppen und

B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Neben den Komponenten (a), (b), (c) und (d) werden Monomere mit nur einer reaktiven Gruppe im allgemeinen in Mengen bis zu 15 mol-%, bevorzugt bis zu 8 mol-%, bezogen auf die Gesamtmenge der Komponenten (a), (b), (c) und (d) eingesetzt.

Die Umsetzung der Komponenten (a) bis (d) erfolgt im allgemeinen bei Reaktionstemperaturen von 20 bis 180°C, bevorzugt 50 bis 150°C unter Normaldruck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist

nur kurzen Reaktionszeiten besonders Extruder, insbesondere selbstreinigende Mehrschneckenextruder.

Meistens werden die Dispersionen nach einem der folgenden Verfahren hergestellt:
Nach dem "Acetonverfahren" wird in einem mit Wasser mischbaren und bei Normaldruck unter 100°C siedenden Lösungsmittel aus den Komponenten (a) bis (d) ein anionisches Polyurethan hergestellt. Es wird soviel Wasser zugegeben, bis sich eine Dispersion bildet, in der Wasser die kohärente Phase darstellt. Anschließend wird das Lösungsmittel abdestilliert.

Das "Präpolymer-Mischverfahren" unterscheidet sich vom Acetonverfahren darin, daß nicht ein ausreagiertes (potentiell) anionisches Polyurethan, sondern zunächst ein Präpolymer hergestellt wird, das Isocyanat-Gruppen trägt. Die Komponenten (a) bis (d) werden hierbei so gewählt, daß das definitionsgemäße Verhältnis A : B größer 1,0 bis 3, bevorzugt 1,05 bis 1,5 beträgt. Das Präpolymer wird zuerst in Wasser dispergiert und anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanat-gruppen zu Amingruppen hydrolysiert, die mit noch verbliebenen Isocyanatgruppen der Präpolymere unter Kettenverlängerung abreagieren.

Hydrophobe Hilfsmittel, die unter Umständen nur schwierig homogen in der fertigen Dispersion zu verteilen sind wie beispielsweise Phenol-Kondensationharze aus Aldehyden und Phenol bzw. Phenolderivaten oder Epoxidharze und weitere z.B. in der DE-A 39 03 538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden. Die in DE-A 39 03 538, 40 24 567 und 43 09 079 genannten hydrophoben Hilfsmittel sind hiermit vollständig einbezogen.

Die Polyurethan Dispersionen können handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Die Verpackungsfolie kann zum Verpacken von Gegenständen verwendet werden, indem man Teile der Verpackungsfolie auf eine Temperatur oberhalb des Schmelzpunktes des Polyurethans erwärmt und gleichzeitig oder bis zu 10 Minuten nach dem Abkühlen der Verpackungsfolie diese Teile miteinander, mit anderen Teilen der Verpackungsfolie oder einem anderen Substrat, z.B. Papier oder Pappe so verpreßt, daß ein zu verpackendes Gut umschlossen wird.

Die erfindungsgemäße Verpackungsfolie eignet sich insbesondere für die Verpackung von Gegenständen, die üblicherweise in Tüten oder Beuteln fest verpackt werden, also beispielsweise Lebensmittel, insbesondere temperaturempfindliche Süßigkeiten wie Schokoladenriegel oder Speiseeisriegel.

Bevorzugt wurden die Gegenstände so verpackt, daß sie ohne Zerstörung der Folie nicht mehr aus der Verpackung entfernt werden können.

Bei der Verpackung dieser Gegenstände kann man beispielsweise so vorgehen, daß man

AI) den Gegenstand mit der erfindungsgemäßen Verpackungsfolie umhüllt, indem man ihn beispielsweise in die Verpackungsfolie einrollt, die Verpackungsfolie um ihn faltet, oder einen aus der Verpackungsfolie hergestellten Beutel mit ihm befüllt und danach

AII) Teile der Verpackungsfolie thermoaktiviert, indem man sie auf eine Temperatur oberhalb des Schmelzpunktes des Polyurethans erhitzt, und

AIII) gleichzeitig oder innerhalb von 10 min, bevorzugt innerhalb von 2 min, nach dem Abkühlen auf eine Temperatur unterhalb des Schmelzpunktes des Polyurethans die thermoaktivierten Teile miteinander oder mit anderen Teilen der Verpackungsfolie verpreßt, wobei man die Polyurethanbeschichtungen miteinander in Kontakt bringt.

Zur Thermoaktivierung (Schritt AII) wird ein Teil der Verpackungsfolie bevorzugt auf eine Temperatur von 10 bis 30°C oberhalb der Schmelztemperatur des Polyurethans erhitzt.

Zur Versiegelung der Verpackungsfolie (Schritt AIII) geht man zweckmäßigerweise so vor, daß man die beiden zu versiegelnden Teile der Verpackungsfolie unter Anwendung eines Druckes von 0,2 bis 7 bar in Kontakt verpreßt.

Die Art und Weise der Durchführung der einzelnen Arbeitsschritte ist allgemein bekannt und kann beispielsweise dem Buch "Verpacken mit Kunststoffen", Carl Hauser Verlag, München 1974 entnommen werden.

Die Verpackungsfolien eignen sich beispielsweise gut für die Herstellung von Beuteln. In der Verpackungsindustrie geht man dabei häufig so vor, daß man die Verpackungsfolie, die in Form von Rollen bezogen wird, abwickelt, sie ggf. zu kleineren Bahnen schneidet und diese Bahnen zu einem Schlauch zusammenführt. An der Stelle, an denen sich die seitlichen Enden der Bahnen überlappen, werden die Verpackungsfolien unter Anwendung von Druck und Wärme versiegelt, so daß ein Schlauch mit einer Außenfalz entsteht. Anschließend wird der Schlauch in einem gewissen Abstand von seinem Ende quer zu Folienbahn versiegelt, so daß ein offener Beutel entsteht. Im nächsten Arbeitsschritt wird der Beutel befüllt. Danach wird die Öffnung des Beutels versiegelt und der gefüllte und verschlossene

Beutel von dem Rest des Folienschlauchs abgeschnitten, wonach durch Versiegelung quer zur Folienbahn ein neuer Beutel hergestellt wird, und die weiteren Arbeitsschritte wiederholt werden.

Die erfindungsgemäßen Verpackungsfolien bieten den Vorteil, daß das Versiegeln und Herstellen der Beutel bei vergleichsweise niedrigen Temperaturen vorgenommen werden kann, so daß das Packgut der Wärme, die vor den Siegelvorrichtungen abgegeben wird, im geringeren Umfang ausgesetzt ist. Zudem sind die Siegelnähte bereits kurze Zeit nach Entfernung der Siegelvorrichtung mechanisch belastbar, so daß die Beutel unmittelbar nach deren Herstellung befüllt werden können. Hierdurch lassen sich kurze Taktzeiten beim Verpackungsverfahren erreichen, was seine Wirtschaftlichkeit verbessert.

Falls erforderlich sein sollte, die thermische Beanspruchung noch weiter zu reduzieren, eignet sich besonders das folgende Verpackungsverfahren, bei dem man

BI) Teile einer Verpackungsfolie nach den Ansprüchen 1 bis 5 thermoaktiviert, indem man sie auf eine Temperatur oberhalb des Schmelzpunktes des Polyurethans erhitzt, danach

BII) die thermoaktivierten Teile der Verpackungsfolie auf eine Temperatur unterhalb des Schmelzpunktes des Polyurethans abkühlt, danach

BIII) innerhalb von 10 min, bevorzugt innerhalb von 2 min nach der Durchführung des Schrittes (BII), einen Gegenstand mit der Verpackungsfolie umhüllt und danach

BIV) innerhalb von 10 min, bevorzugt innerhalb von 2 min nach der Durchführung des Schrittes (BII) die thermoaktivierten Teile miteinander oder mit anderen Teilen der Verpackungsfolie, bevorzugt mit einem Druck von 0,2 bis 7 bar, so verpreßt, daß die Polyurethanbeschichtungen miteinander in Kontakt kommen.

Durch eine räumliche Trennung des Arbeitsschritts, bei dem die Verpackungsfolien in den siegelbaren Zustand überführt wird, von dem eigentlichen Verpackungsvorgang, die bei diesem Verfahren möglich ist, kann eine thermische Schädigung des Packgutes ausgeschlossen werden.

Es hat sich gezeigt, daß die Verpackungsfolien bei Temperaturen unterhalb des Schmelzpunktes des Polyurethans blockfest sind, d.h., man kann die Folienflächen miteinander in Kontakt bringen, ohne daß sie aneinander haften. Diese Eigenschaft ist für einen einfachen Transport und Verarbeitung der Verpackungsfolien von großer Bedeutung.

Die vorteilhaften Verarbeitungseigenschaften der Verpackungsfolien sind vermutlich darauf zurückzuführen, daß das Polyurethan, wenn es nach der Erwärmung oberhalb seines Schmelzpunktes wieder abgekühlt wird, nicht sofort rekristallisiert, sondern noch einige Minuten in dem amorphen Zustand verbleibt, in dem es adhäsiv ist.

Beispiele:

Die Messung des Schmelzpunktes und der Schmelzenthalpie erfolgte auf folgende Weise:

Die Messung erfolgte an Polyurethanfilmen einer Dicke von 200 µm, die vor der Messung in einem Umluft-Trockenschrank bei 40°C 72 h getrocknet wurden. Zur Vorbereitung der Messung wurden ca. 13 mg des Polyurethans in Pfännchen gefüllt, die üblicherweise als Probengefäße für Messungen in DSC-Geräten (Differential-Scanning-Calorimetry) eingesetzt wurden. Die Pfännchen wurden verschlossen, die Proben zuerst auf 120°C aufgeheizt, mit 20 K/min abgekühlt und 20 h bei 20°C getempert. Die so vorbereiteten Proben wurden nach der DSC-Methode nach DIN 53765 vermessen, wobei die Probe mit 20 K/min aufgeheizt wurde.

Als Schmelztemperatur wurde die Peaktemperatur Tsp gemäß DIN 53765 ausgewertet. Die Schmelzenthalpie wurde wie in Bild 4 der DIN 53765 ermittelt.

Die Messung von Schmelzpunkt und Schmelzenthalpie der eingesetzten Diole b.1.1 erfolgte auf analoge Weise.

Herstellungsbeispiele:

Die Viskositäten der Dispersionen wurden bei einer Temperatur von 20°C und einer Schergeschwindigkeit von $250 s^{-1}$ mit einem Rotations-Rheometer mit konzentrischen Zylindern (Spindeldurchmesser 38,7 mm, Becherdurchmesser: 42,0 mm) vermessen.

Die Teilchengröße der Latexpartikel wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

$$LD = \frac{Intensität_{Disp.} \times 100}{Intensität_{Wasser}}$$

Die in den nachfolgenden Beispielen verwendeten Symbole haben die nachstehend wiedergegebenen Bedeutungen:

OHZ = Hydroxylzahl
ADS = Adipinsäure
B14 = 1,4-Butandiol
TDI = Toluylendiisocyanat
HDI = Hexamethylendiisocyanat
PUD-Salz = Na-Salz des Michael-Addukts aus Acrylsäure und Ethylendiamin
DBTL = Dibutylzinndilaurat
DMPA = Dimethylolpropionsäure
VE-Wasser= Entiontes Wasser

Beispiel 1:

| | | |
|---|---|---|
| Vorlage<br>722,9 g<br><br><br>1,25 g<br>191 g | <br>0,3 mol | <br>Polyester aus ADS und Butandiol-1,4 OHZ=46,7<br>Schmelzpunkt: 55°C<br>Schmelzenthalpie: 85 J/g<br>DBTL<br>Aceton |
| Zulauf 1<br>30,9 g | 0,18 mol | TDI |
| Zulauf 2<br>29,9 g | 0,18 mol | HDI |
| Zulauf 3<br>766 g | | Aceton |
| Zulauf 4<br>40,95 | 0,093 mol | PUD-Salz, 40%ig in Wasser |
| Zulauf 5<br>1200 g | | VE-Wasser |

Die Vorlage wird auf 60°C erhitzt und Zulauf 1 zugegeben. Nach 1 h bei 60°C wird Zulauf 2 zugegeben und weitere 45 min bei 60°C gehalten. Dann wird auf 55°C abgekühlt und mit Zulauf 3 verdünnt. Der NCO-Gehalt beträgt jetzt 0,49 %. Es wird mit Zulauf 4 kettenverlängert und mit Zulauf 5 dispergiert. Das Aceton wird im Vakuum unter Verwendung eines handelsüblichen Entschäumers bei 100 mbar und 43°C Innentemperatur abdestilliert. Nach Einstellung des Feststoffgehaltes auf 40 % hat die Dispersion folgende Analysenwerte:
LD: 90 Visk.: 67 mPas pH:8,3

Beispiel 2:

| | | |
|---|---|---|
| Vorlage<br>614,6 g<br>0,5 g<br>16,1 g<br>26,21 g | <br>0,29 mol<br><br>0,12 mol<br>0,29 mol | <br>Polyester aus ADS und Hexandiol-1,6 OHZ=53,1<br>DBTL<br>DMPA<br>Butandiol-1,4 |

(fortgesetzt)

| | | |
|---|---|---|
| 195 g | | Aceton |
| Zulauf 1<br>143,1 g | 0,82 mol | TDI |
| Zulauf 2<br>782 g | | Aceton |
| Zulauf 3<br>4,2 g | 0,12 mol | NaOH in 20 g VE-Wasser |
| Zulauf 4<br>1200 g | | VE-Wasser |

Die Vorlage wird auf 65°C erhitzt und Zulauf 1 zugegeben. Es wird 4 h auf 70°C gehalten, dann mit Zulauf 2 verdünnt und auf 55°C abgekühlt. Der NCO-Gehalt beträgt 0,53 %. Zulauf 3 wird schnell zugegeben und nach 2 min mit Zulauf 4 dispergiert. Destillation wie in Beispiel 1. Feststoffgehalt: 40 % LD: 47 Visk.: 17 mPas pH: 7,7

Beispiel 3:

| | | |
|---|---|---|
| Vorlage<br>608 g<br><br><br>0,5 g<br>16,1 g<br>27,38 g<br>195 g | <br>0,3 mol<br><br><br><br>0,12 mol<br>0,3 mol | <br>Polyester aus ADS und Ethylenglykol OHZ=56<br>Schmelzpunkt: 50,5°C<br>Schmelzenthalpie: 85 J/g<br>DBTL<br>DMPA<br>Butandiol-1,4<br>Aceton |
| Zulauf 1<br>147,8 g | 0,848 mol | TDI |
| Zulauf 2<br>782 g | | Aceton |
| Zulauf 3<br>4,2 g | 0,12 mol | NaOH in 20 g VE-Wasser |
| Zulauf 4<br>1200 g | | VE-Wasser |

Durchführung wie Beispiel 2, der NCO-Gehalt nach Zulauf 2 beträgt hier 0,61 %. Feststoffgehalt 40 % LD: 11,3 Visk.: 8,9 mPas pH: 7,7

Beispiel 4:

| | | |
|---|---|---|
| Vorlage<br>714,3 g<br><br><br><br>0,5 g<br>191 g | <br>0,356 mol | <br>Polyester aus ADS, Butandiol-1,4 und Hexandiol-1,6 2:1, OHZ=56<br>Schmelzpunkt: 45°C<br>Schmelzenthalpie: 100 J/g<br>DBTL<br>Aceton |

(fortgesetzt)

| | | |
|---|---|---|
| Zulauf 1<br>35,3 g | 0,203 mol | TDI |
| Zulauf 2<br>34,1 | 0,203 mol | HDI |
| Zulauf 3<br>766 g | | Aceton |
| Zulauf 4<br>40,95 g | 0,93 mol | PUD-Salz, 40%ig in Wasser |
| Zulauf 5<br>1200 g | | VE-Wasser |

Durchführung wie Beispiel 1, nach Zulauf 2 wird 30 min. bei 65°C gehalten. Der NCO-Gehalt nach Zulauf 3 beträgt 0,57 %. Feststoffgehalt: 40 % LD: 95 Visk.: 84 mPas pH:7,7

Vergleichsbeispiel 1:

| | | |
|---|---|---|
| Vorlage<br>540,8 g<br>0,5 g<br>25,8 g<br>50,7 g | <br>0,24 mol<br><br>0,19 mol<br>0,487 mol | <br>Polypropylenoxiddiol OHZ=50,5<br>DBTL<br>DMPA<br>Neopentylglykol |
| Zulauf 1<br>182,7 g | 1,05 mol | TDI |
| Zulauf 2<br>978 g | | Aceton |
| Zulauf 3<br>6,15 g | 0,154 mol | NaOH in 20 g VE-Wasser |
| Zulauf 4<br>1200 g | | VE-Wasser |

Die Vorlage wird auf 80°C erhitzt und Zulauf 1 zugegeben. Dann wird 2 h auf 110°C erhitzt. Dann wird vorsichtig mit Zulauf 2 verdünnt und dabei auf 55°C abgekühlt. Der NCO-Gehalt beträgt 0,49 %. Es wird mit Zulauf 3 neutralisiert und mit Wasser dispergiert. Die Destillation erfolgt unter Verwendung eines handelsüblichen Entschäumers und Viskositätsreglers.
Feststoffgehalt: 40 % % LD: 91 Visk.: 203 mPas pH. 8,2

Vergleichsbeispiel 2:

| | | |
|---|---|---|
| Vorlage<br>670,3 g<br><br><br><br>0,5 g<br>21,5<br>195 g | <br>0,35 mol<br><br><br><br><br>0,16 mol<br> | <br>Polyester aus ADS, Neopentylglykol und Hexandiol-1,6, OHZ=58,1 Verhältnis Hexandiol: Neopentylglycol 2,3:1<br>Schmelzpunkt: 24,6°C (Hauptpeak)<br>Schmelzenthalpie: 49 J/g<br>DBTL<br>DMPA<br>Aceton |

(fortgesetzt)

| | | |
|---|---|---|
| Zulauf 1<br>108,2 g | 0,62 mol | TDI |
| Zulauf 2<br>782 g | | Aceton |
| Zulauf 3<br>5,13 g | 0,128 mol | NaOH in 20 g VE-Wasser |
| Zulauf 4<br>1200 g | | VE-Wasser |

Durchführung wie in Beispiel 2. Der NCO-Gehalt nach Zulauf 2 beträgt 0,75 %. Feststoffgehalt: 40 % LD: 79 Visk.: 20 mPas pH: 7,7

| Schmelzenthalpie und Schmelzpunkt | | |
|---|---|---|
| Probe | Schmelzenthalpie [J/g] | Schmelzpunkt [°C] |
| Beispiel 1 | 61 | 57 |
| Beispiel 2 | 51 | 56.8 |
| Beispiel 3 | 27 | 41.3, 50.3 Doppelpeak |
| Beispiel 4 | 62 | 38.6 |
| Vergleichsbeispiel 1 | <2 | - |
| Vergleichsbeispiel 2 | <2 | 34,7 |

B. Anwendungsbeispiele

B.1 Herstellung der Verpackungsfolien

Als Trägerfolien wurden orientierte Polypropylenfolien (OPP-Folien) eingesetzt, die mit einem handelsüblichen zweikomponentigen Polyurethanprimer beschichtet waren. Vor der Beschichtung mit der jeweiligen Polyurethan wurden die Trägerfolien einer Coronavorbehandlung unterzogen. Die so vorbehandelten Trägerfolien wurden gleichmäßig mit einem Auftragsgewicht von 4 g/m$^2$ mit der jeweiligen Polyurethandispersion beschichtet, deren Feststoffgehalt auf 30 Gew.-% eingestellt wurde. Zum Vergleich wurden weiterhin 2 Verpackungsfolien anstelle der Polyurethandispersion mit einer handelsüblichen Polyacrylat- (Vergleichsbeispiel 3) und einer PVDC-Dispersion (Vergleichsbeispiel 4) beschichtet.

B.2 Anwendungstechnische Prüfung der Verpackungsfolie.

I. Blockverhalten

Es wurden ein Stapel aus 10 Verpackungsfolien gebildet, wobei jeweils 2 Folien Schicht gegen Schicht aufeinander gelegt wurden. Nach 6 Tagen Lagerung bei Normklima, und einer Belastung von 100 N/cm$^2$, wurden die Verpackungsfolien manuell getrennt und nach einer Notenskala beurteilt.

Note 1 blockfrei
Note 2 geringe Verblockung
Note 3 mäßige Verblockung
Note 4 starke Verblockung

II. Heißsiegelbarkeit

Die beschichteten Proben werden Schicht gegen Schicht 0,25 sec. lang mit 2,5 bar Anpreßdruck bei 50°C gesiegelt. Die Siegelbacken haben das Format 150 x 10 mm, der resultierende Druck beträgt 0,25 N/mm$^2$.

Die versiegelte Probe wird in (üblicherweise 7) Einzelprüflinge geschnitten, wobei jeder 15 mm breit ist. Die

Siegelnahtfestigkeit (SNF) wird mit einer Computerreißmaschine bei einer Reißgeschwindigkeit von 150 mm/min gemessen. Es wird jeweils die Anrißfestigkeit und die Weiterrißfestigkeit in [N] angegeben.

III. Kaltsiegelbarkeit

Ein Einzelprüfling, der mit einer Dispersion gemäß Beispiel 1 beschichtet war und der wie unter Punkt II, "Heißsiegelbarkeit" beschrieben vorbereitet wurde, wird 2 min im Trockenschrank auf 50°C erhitzt, innerhalb weniger Sekunden auf Raumtemperatur abgekühlt und 1 min nach dem Abkühlen mit unbeheizten Siegelbacken bei Raumtemperatur versiegelt.

Anrißfestigkeit: 3,7 N
Weiterrißfestigkeit: 2,8 N

Beispiel 1

| | Bsp. 1 | Bsp. 2 | Bsp. 3 | Bsp. 4 | Vgl.-Bsp. 1 | Vgl.-Bsp. 2 | Vgl.-Bsp. 3 | Vgl.-Bsp. 4 |
|---|---|---|---|---|---|---|---|---|
| Blockverhalten | | | | | | | | |
| Schicht/Schicht | 1 | 1 | 2 | 1 | 4 | 4 | 1 | 1 |
| Schicht/Rückseite | 1 | 1 | 1 | 2 | 4 | 3 | 1 | 1 |
| Heißsiegelbarkeit | | | | | | | | |
| Anrißfestigkeit [N] | 3,1 | 2,9 | 4,2 | 2,0 | 3,2 | 3,2 | KS | KS |
| Weiterrißfestigkeit [N] | 2,5 | 2,4 | 3,2 | 1,9 | 2,0 | 2,6 | KS | KS |

KS= Keine Siegelung

## Patentansprüche

1. Verpackungsfolien, die mit einem Polyurethan beschichtet sind, welches hydrophile Gruppen trägt, die die Wasserdispergierbarkeit des Polyurethans ermöglichen und welches einen Schmelzpunkt von 20 bis 70°C aufweist, wobei die Schmelzenthalpie in diesem Temperaturintervall mindestens 20 J/g beträgt.

2. Verpackungsfolien nach Anspruch 1, wobei das Polyurethan aufgebaut ist aus

   a) mehrwertigen Isocyanaten mit 4 bis 30 C-Atomen,

   b) Diolen, von denen

      b1) 10 bis 100 mol-%, bezogen auf die Gesamtmenge der Diole (b), ein Molekulargewicht von 500 bis 5000 g/mol aufweisen, wobei wenigstens 80 Gew.-% der Diole (b1) Diole (b1.1) sind, die einen Schmelzpunkt von 30 bis 100°C aufweisen und deren Schmelzenthalpie in diesem Temperaturintervall mindestens 50 J/g beträgt und

      b2) 0 bis 90 mol-%, bezogen auf die Gesamtmenge der Diole (b), ein Molekulargewicht von 60 bis 500 g/mol aufweisen,

   c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und

   d) von den Monomeren (a), (b) und (c) verschiedene Monomere mit wenigstens einer Isocyanatgruppe oder wenigstens einer gegenüber Isocyanatgruppen reaktiven Gruppe, die darüberhinaus wenigstens eine hydrophile Gruppe trägt, wodurch die Wasserdispergierbarkeit der Polyurethane bewirkt wird.

3. Verpackungsfolien nach Anspruch 1 oder 2, wobei das Diol (b1.1) ein Polyesterdiol ist aus

   - einem Alkohol $HO-(CH_2)_x-OH$, wobei x eine gerade Zahl von 2 bis 20 ist und

   - einer Dicarbonsäure $HOOC-(CH_2)_y-COOH$, wobei y eine gerade Zahl von 2 bis 20 ist.

4. Verpackungsfolien nach den Ansprüchen 2 oder 3, wobei es sich bei dem Monomer (d) um ein Diol mit einem Molekulargewicht von 500 bis 10000 g/mol und mindestens 2 Carboxylgruppen, erhältlich durch Umsetzung von aliphatischen Diolen mit Tetracarbonsäuredianhydriden im Molverhältnis von 1,05 : 1 bis 2 : 1 handelt.

5. Verfahren zur Herstellung von Verpackungsfolien nach den Ansprüchen 1 bis 5, dadurch gekennzeichnet, daß man eine Trägerfolie mit einer wässerigen Dispersion enthaltend ein Polyurethan, welches hydrophile Gruppen trägt, die die Wasserdispergierbarkeit des Polyurethans ermöglichen und welches einen Schmelzpunkt zwischen 20 und 70°C aufweist, wobei die Schmelzenthalpie in diesem Temperaturintervall mindestens 20 J/g beträgt, beschichtet.

6. Verpackungsverfahren, dadurch gekennzeichnet, daß man

   AI) einen Gegenstand mit einer Verpackungsfolie nach den Ansprüchen 1 bis 5 umhüllt, danach

   AII) Teile der Verpackungsfolie thermoaktiviert, indem man sie auf eine Temperatur oberhalb des Schmelzpunktes des Polyurethans erhitzt, und

   AIII) gleichzeitig oder innerhalb von 10 min nach den Abkühlen auf eine Temperatur unterhalb des Schmelzpunktes des Polyurethans die thermoaktivierten Teile miteinander oder mit anderen Teilen der Verpackungsfolie so verpreßt, daß die Polyurethanbeschichtungen miteinander in Kontakt kommen.

7. Verpackungsverfahren, dadurch gekennzeichnet, daß man

   BI) Teile einer Verpackungsfolie nach den Ansprüchen 1 bis 5 thermoaktiviert, indem man sie auf eine Temperatur oberhalb des Schmelzpunktes des Polyurethans erhitzt, danach

BII) die thermoaktivierten Teile der Verpackungsfolie auf Punktes des Polyurethans abkühlt, danach

BIII) innerhalb von 10 min nach der Durchführung des Schrittes (BII) einen Gegenstand mit der Verpackungsfolie umhüllt und danach

BIV) innerhalb von 10 min nach der Durchführung des Schrittes (BII) die thermoaktivierten Teile miteinander oder mit anderen Teilen der Verpackungsfolie so verpreßt, daß die Polyurethanbeschichtungen miteinander in Kontakt kommen.

**8.** Verwendungen der Verpackungsfolien nach den Ansprüchen 1 bis 4 zur Verpackung von Gegenständen.

## Claims

**1.** A packaging film which is coated with a polyurethane which bears hydrophilic groups which make the polyurethane water-dispersible and which has a melting point of from 20 to 70°C, with the enthalpy of fusion in this temperature range being at least 20 J/g.

**2.** A packaging film as claimed in claim 1, wherein the polyurethane is prepared from

a) polyfunctional isocyanates having from 4 to 30 carbon atoms,

b) diols of which

b1) from 10 to 100 mol%, based on the total amount of the diols (b), have a molecular weight of from 500 to 5000 g/mol, where at least 80% by weight of the diols (b1) are diols (b1.1) having a melting point of from 30 to 100°C and an enthalpy of fusion in this temperature range of at least 50 J/g and

b2) from 0 to 90 mol%, based on the total amount of diols (b), have a molecular weight of from 60 to 500 g/mol,

c) if desired, further polyfunctional compounds which are different from the diols (b) and contain reactive groups which are alcoholic hydroxyl groups or primary or secondary amino groups, and

d) monomers which are different from the monomers (a), (b) and (c) and contain at least one isocyanate group or at least one group which is reactive toward isocyanate groups, and which also bears at least one hydrophilic group, which makes the polyurethane water-dispersible.

**3.** A packaging film as claimed in claim 1 or 2, wherein the diol (b1.1) is a polyester diol derived from

- an alcohol $HO-(CH_2)_x-OH$, where x is an even number from 2 to 20, and
- a dicarboxylic acid $HOOC-(CH_2)_y-COOH$, where y is an even number from 2 to 20.

**4.** A packaging film as claimed in claims 2 or 3, wherein the monomer (d) is a diol having a molecular weight of from 500 to 10,000 g/mol and at least 2 carboxyl groups, obtainable by reacting aliphatic diols with tetracarboxylic dianhydrides in a molar ratio of from 1.05:1 to 2:1.

**5.** A process for producing packaging films as claimed in any of claims 1 to 4, which comprises coating a support film with an aqueous dispersion comprising a polyurethane which bears hydrophilic groups which make the polyurethane water-dispersible and which has a melting point of from 20 to 70°C, with the enthalpy of fusion in this temperature range being at least 20 J/g.

**6.** A packaging process which comprises

AI) enclosing an article in a packaging film as claimed in any of claims 1 to 4, then

AII) thermoactivating parts of the packaging film by heating them to a temperature above the melting point of the polyurethane, and

AIII) simultaneously or within 10 minutes of cooling to a temperature below the melting point of the polyurethane, pressing the thermoactivated parts onto one another or onto other parts of the packaging film in such a way that the polyurethane coatings come into contact with one another.

**7.** A packaging process which comprises

BI) thermoactivating parts of a packaging film as claimed in any of claims 1 to 4 by heating them to a temperature above the melting point of the polyurethane, then

BII) cooling the thermoactivated parts of the packaging film to a temperature below the melting point of the polyurethane, then

BIII) within 10 minutes of carrying out the step (BII), enclosing an article in the packaging film and then

BIV) within 10 minutes of carrying out the step (BII), pressing the thermoactivated parts onto one another or onto other parts of the packaging film in such a way that the polyurethane coatings come into contact with one another.

**8.** The use of the packaging films as claimed in any of claims 1 to 4 for packaging articles.

## Revendications

**1.** Feuilles d'emballage revêtues de polyuréthane portant des groupements hydrophiles permettant d'assurer la dispersabilité dans l'eau du polyuréthane et présentant un point de fusion de 20 à 70°C, où l'enthalpie de fusion dans cet intervalle de températures s'élève à au moins 20 J/g.

**2.** Feuilles d'emballage selon la revendication 1, où le polyuréthane est construit à partir

a) d'isocyanates polyfonctionnels ayant de 4 à 30 atomes de carbone,
b) de diols parmi lesquels

b1 ) 10 à 100% en moles, par rapport à la quantité totale des diols b), présentent un poids moléculaire de 500 à 5 000 g/mole, où au moins 80% en poids des diols (b1) sont des diols (b1.1), qui présentent un point de fusion de 30 à 100°C et dont l'enthalpie de fusion dans cet intervalle de température s'élève à au moins 50 J/g et
b2) 0 à 90% en moles, par rapport à la quantité totale des diols b), présentent un poids moléculaire de 60 à 500 g/mole,

c) éventuellement d'autres composés polyfonctionnels différents des diols (b) et ayant des groupements réactifs, pour lesquels il s'agit de groupements hydroxyle alcooliques ou de groupements amine primaire ou secondaire et
d) de monomères différents des monomères (a), (b) et (c) ayant au moins un groupement isocyanate ou au moins un groupement réactif vis-à-vis des isocyanates, portant en outre au moins un groupement hydroxyle par lequel la dispersabilité dans l'eau du polyuréthane est assurée.

**3.** Feuilles d'emballage selon la revendication 1 ou 2, où le diol (b1.1) est un polyesterdiol à base

- d'un alcool $HO-(CH_2)_x-OH$, où x est un nombre entier de 2 à 20 et
- d'un acide dicarboxylique $HOOC-(CH_2)_y-COOH$, où y est un nombre entier de 2 à 20.

**4.** Feuilles d'emballage selon la revendication 2 ou 3, où le monomère (d) est un diol ayant un poids moléculaire de 500 à 10 000 g/mole et ayant au moins deux groupements carboxyle, obtenu par réaction de diols aliphatiques avec des dianhydrides d'acides tétracarboxyliques dans un rapport en moles de 1,05:1 à 2:1.

5. Procédé de préparation de feuilles d'emballage selon l'une quelconque des revendications 1 à 5, caractérisé en ce que l'on revêt une feuille support avec une dispersion aqueuse contenant un polyuréthane portant des groupements hydrophiles permettant d'assurer la dispersabilité dans l'eau du polyuréthane et présentant un point de fusion de 20 à 70°C, où l'enthalpie de fusion dans cet intervalle de températures s'élève à au moins 20 J/g.

6. Procédé d'emballage, caractérisé en ce que

AI) l'on enveloppe un objet avec une feuille d'emballage selon l'une quelconque des revendications 1 à 5, puis
AII) on active thermiquement des parties de la feuille d'emballage, en les chauffant à une température supérieure au point de fusion du polyuréthane, et
AIII) simultanément ou dans les 10 minutes suivant le refroidissement à une température inférieure au point de fusion du polyuréthane, on comprime les parties activées thermiquement ensemble ou avec d'autres parties de la feuille d'emballage, de sorte que les revêtements de polyuréthane viennent en contact les uns avec les autres.

7. Procédé d'emballage, caractérisé en ce que

BI) on active thermiquement des parties d'une feuille d'emballage selon l'une quelconque des revendications 1 à 5, en les chauffant à une température supérieure au point de fusion du polyuréthane, puis
BII) on refroidit les parties activées thermiquement de la feuille d'emballage à une température inférieure au point de fusion du polyuréthane, puis
BIII) dans les 10 minutes suivant la réalisation de l'étape (BII), on enveloppe un objet avec la feuille d'emballage et ensuite
BIV) dans les 10 minutes suivant la réalisation de l'étape (BII), on comprime les parties activées thermiquement ensemble ou avec d'autres parties de la feuille d'emballage, de sorte que les revêtements de polyuréthane viennent en contact les uns avec les autres.

8. Utilisation des feuilles d'emballage selon l'une quelconque des revendications 1 à 4 pour l'emballage d'objets.